Europäisches Patentamt

European Patent Office

Office européen des brevets

(19)

(11) **EP 1 236 321 B1**

(12) **FASCICULE DE BREVET EUROPEEN**

(45) Date de publication et mention de la délivrance du brevet:
**18.02.2004 Bulletin 2004/08**

(21) Numéro de dépôt: **00990034.1**

(22) Date de dépôt: **24.11.2000**

(51) Int Cl.$^7$: **H04L 25/03**, H04L 1/06, H04L 1/00, H04L 1/20

(86) Numéro de dépôt international:
**PCT/FR2000/003282**

(87) Numéro de publication internationale:
**WO 2001/039446 (31.05.2001 Gazette 2001/22)**

(54) **EGALISEUR ADAPTATIF MULTI-VOIES**

MEHRZWEIGIGER ADAPTIVER ENTZERRER

MULTICHANNEL ADAPTIVE EQUALISER

(84) Etats contractants désignés:
**DE FR GB**

(30) Priorité: **25.11.1999 FR 9914844**

(43) Date de publication de la demande:
**04.09.2002 Bulletin 2002/36**

(73) Titulaires:
- **Groupe des Ecoles de Telecommunications-Etablissement ENST de Bretagne**
  **75634 Paris (FR)**
- **FRANCE TELECOM**
  **75015 Paris (FR)**

(72) Inventeurs:
- **LABAT, Joël**
  **F-29470 Plougastel Daoulas (FR)**
- **LAOT, Christophe**
  **F-29217 Plougonvelin (FR)**

(74) Mandataire: **Callon de Lamarck, Jean-Robert et al**
  **Cabinet Régimbeau**
  **20, rue de Chazelles**
  **75847 Paris cedex 17 (FR)**

(56) Documents cités:
EP-A- 0 725 497          FR-A- 2 738 967
US-A- 5 335 251          US-A- 5 513 214

- **ALBONICO D ET AL: "Test of an high data rate acoustic link in shallow water" IEEE OCEANIC ENGINEERING SOCIETY. OCEANS'98. CONFERENCE PROCEEDINGS (CAT. NO.98CH36259), IEEE OCEANIC ENGINEERING SOCIETY. OCEANS'98. CONFERENCE PROCEEDINGS, NICE, FRANCE, 28 SEPT.-1 OCT. 1998, pages 1028-1032 vol.2, XP002144348 1998, New York, NY, USA, IEEE, USA ISBN: 0-7803-5045-6**
- **LABAT J ET AL: "ADAPTIVE DECISION FEEDBACK EQUALIZATION: CAN YOU SKIP THE TRAINING PERIOD?" IEEE TRANSACTIONS ON COMMUNICATIONS,US,IEEE INC. NEW YORK, vol. 46, no. 7, 1 juillet 1998 (1998-07-01), pages 921-930, XP000779692 ISSN: 0090-6778 cité dans la demande**
- **LABAT J ET AL: "Blind decision feedback equalization application to underwater communication systems" IEEE OCEANIC ENGINEERING SOCIETY. OCEANS'98. CONFERENCE PROCEEDINGS, 28 septembre 1998 (1998-09-28) - 1 octobre 1998 (1998-10-01), pages 805-809 vol.2, XP002144349 New York, NY, USA ISBN: 0-7803-5045-6**
- **LABAT J ET AL: "IS TRAINING OF ADAPTIVE EQUALIZERS STILL USEFUL ?" IEEE VEHICULAR TECHNOLOGY CONFERENCE, vol. CONF. 47, 18 novembre 1996 (1996-11-18), pages 968-972, XP000741573 New York, NY, USA ISBN: 0-7803-3660-7**

- MOTTIER D ET AL: "Self-adaptive decision feedback equalization: application to high-order QAM signals" PROCEEDINGS OF ICC'97 - INTERNATIONAL CONFERENCE ON COMMUNICATIONS, 8 - 12 juin 1997, pages 1100-1104 vol.2, XP002144350 1997, New York, NY, USA ISBN: 0-7803-3925-8
- DESPINS C L B ET AL: "COMPOUND STRATEGIES OF CODING, EQUALIZATION, AND SPACE DIVERSITY FOR WIDE-BAND TDMA INDOOR WIRELESS CHANNELS" IEEE TRANSACTIONS ON VEHICULAR TECHNOLOGY,US,IEEE INC. NEW YORK, vol. 41, no. 4, 1 novembre 1992 (1992-11-01), pages 369-379, XP000362350 ISSN: 0018-9545
- TAKAYUKI NAGAYASU ET AL: "PERFORMANCE OF 16QAM WITH DECISION FEEDBACK EQUALIZER USING INTERPOLATION FOR LAND MOBILE COMMUNICATIONS" PROCEEDINGS OF THE VEHICULAR TECHNOLOGY SOCIETY CONFERENCE (VTSC),US,NEW YORK, IEEE, vol. CONF. 42, 10 mai 1992 (1992-05-10), pages 384-387, XP000339757 ISBN: 0-7803-0673-2
- LABAT J ET AL: "Blind spatio-temporal decision feedback equalization: a self-adaptive approach" SEAMLESS INTERCONNECTION FOR UNIVERSAL SERVICES. GLOBAL TELECOMMUNICATIONS CONFERENCE. GLOBECOM'99. (CAT. NO.99CH37042), SEAMLESS INTERCONECTION FOR UNIVERSAL SERVICES. GLOBAL TELECOMMUNICATIONS CONFERENCE. GLOBECOM'99, RIO DE JANEIREO, BRAZIL, 5 - 9 décembre 1999, pages 2301-2305 vol.5, XP002144338 Piscataway, NJ, USA ISBN: 0-7803-5796-5

## Description

La présente invention est relative aux dispositif d'égalisation (ou égaliseur) pour récepteurs de systèmes de communications numériques multi-voies.

Dans les systèmes de communications actuels, les récepteurs comportent un certain nombre de fonctions parmi lesquelles la démodulation, c'est à dire la translation en bande de base du signal reçu, l'égalisation, la synchronisation (rythme et porteuse), la décision et le décodage de canal.

L'égalisation, dans sa version temporelle, consiste pour l'essentiel à réduire l'interférence entre symboles (IES), phénomène lié au fait que globalement la chaîne de communications ne satisfait pas ce qu'il est convenu d'appeler le critère de Nyquist. Ceci peut résulter d'une mauvaise stratégie de filtrage, d'un mauvais choix de l'instant d'échantillonnage ou d'un phénomène de propagation par trajets multiples. Ceci est notamment le cas sur les canaux radio-mobiles, sur les canaux ionosphériques ou troposphériques et sur les canaux acoustiques sous-marins.

On rappelle par ailleurs, à toutes fins utiles, qu'un système de communications peut être vu schématiquement comme une source émettant, à une cadence 1/T et au travers d'un canal discret équivalent, des symboles discrets à valeur dans un alphabet de dimension finie. Cette cadence est appelée rapidité de modulation et s'exprime en Baud, T désignant l'intervalle de temps séparant l'émission de deux symboles successifs.

Historiquement, les premiers dispositifs chargés de combattre le phénomène d'IES furent introduits par Lucky dans sa publication :

[1] R.W. Lucky, « Automatic Equalization for Digital Communications », BSTJ 44, pp. 547-588, April 1965.

Il s'agissait pour l'essentiel de filtres transverses linéaires « synchrones » (utilisant un seul échantillon par durée symbole) adaptatifs, l'adaptativité étant rendue nécessaire par la nature évolutive du canal de transmission. Les coefficients du filtre étaient actualisés selon un critère de minimisation de bruit sous contrainte d'IES nulle (Zero Forcing en anglo-américain), cette procédure conduisant à « égaliser » le spectre replié d'où la terminologie employée.

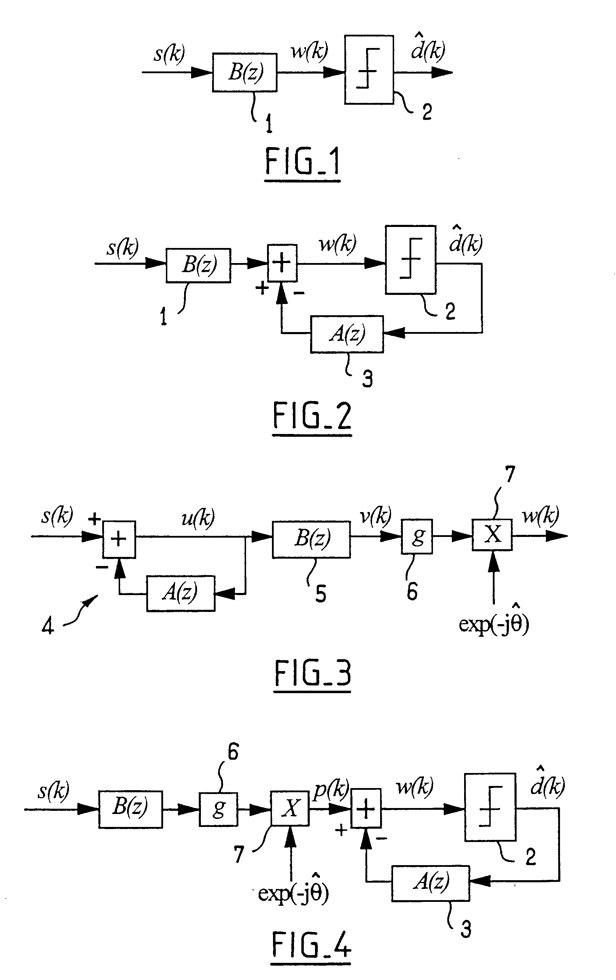

Le schéma de principe d'un égaliseur transverse est illustré sur la figure 1, sur laquelle on a représenté un filtre 1 de fonction de transfert B(z), ainsi que le circuit de décision, référencé par 2, situé en aval dudit filtre 1.

Ce n'est que plus tard qu'apparurent les égaliseurs adaptatifs utilisant pour critère d'optimalité la minimisation de l'erreur quadratique moyenne (EQM). Il s'avérait en effet que, dans le cas de canaux délicats, l'annulation de l'IES pouvait se traduire par une augmentation importante du bruit en sortie de l'égaliseur contribuant ainsi à une forte dégradation des performances tandis que qu'a contrario, le critère de minimisation de l'EQM s'avérait être un compromis judicieux permettant une réduction substantielle de l'IES sans augmentation notable du bruit.

D'un point de vue général, l'égalisation adaptative se fait classiquement en deux étapes. Au cours de la première, le dispositif est piloté par une séquence d'apprentissage, suffisamment longue pour garantir la convergence, puis, dans la seconde étape, il devient auto-adaptatif, c'est à dire qu'il se pilote à partir de ses propres décisions, avec tous les risques inhérents à cette stratégie.

Plus tard encore, il a été proposé dans la publication :

[2] C.A. Belfiore, J.H. Park, « Decision Feedback Equalization », Proccedings of the IEEE 67 (8), August 79, des égaliseurs récursifs non linéaires à retour de décision (Decision Feedback Equalizer), dans lesquels, ainsi qu'illustré sur la figure 2, les données décidées sont réinjectées dans un filtre arrière 3, de fonction de transfert notée A(z), constituant la partie récursive de l'égaliseur.

Cette approche allait permettre d'atteindre des performances assez nettement supérieures à celles obtenues par un égaliseur linéaire. Malheureusement, ces dispositifs pouvaient, dans le même temps, s'avérer extrêmement sensibles aux erreurs de décisions tant et si bien que l'on assistait parfois à un phénomène de propagation d'erreurs allant jusqu'à provoquer la divergence du dispositif dont la sortie n'avait alors plus aucune pertinence au regard des données émises.

Dans de telles conditions, on était alors amené à superviser le dispositif de manière périodique ce qui se traduisait, à tout le moins, par une réduction importante de l'efficacité spectrale.

Autrement dit, le comportement du dispositif se devait d'être contrôlé de manière périodique (ou mieux permanente) de façon à éviter un fonctionnement pathologique de l'égaliseur.

Un but général de l'invention est de proposer une technique permettant de résoudre ce problème de façon élégante.

D'un autre point de vue, s'il est vrai qu'un égaliseur à retour de décisions (ERD) n'est pas optimal au regard du critère de minimisation de la probabilité d'erreur (équivalent au critère de maximum a posteriori), il n'en demeure pas moins que le récepteur optimal décrit dans :

[3] G.D. Forney, Jr, « Maximum likehood sequence estimator of digital sequences in the presence of intersymbol interference » IEEE Trans. On Information Theory, vol. IT-18n pp. 6363-378, May 1972, devient rapidement irréalisable lorsque la longueur de la réponse impulsionnelle s'avère importante. En effet, un tel dispositif effectue, dans un premier temps, une estimation de la réponse impulsionnelle du canal de transmission puis recherche, parmi toutes les séquences émises possibles, celle qui fournirait en sortie du canal ainsi estimé, le signal (vectoriel) le plus proche de l'observation (vectorielle) réellement disponible.

Actuellement, la mise en oeuvre de tels récepteurs passe par l'utilisation de l'algorithme de Viterbi tel que décrit dans :

[4] G.D. Forney, Jr « The Viterbi Algorithm », Proc. IEEE, vol.61, pp.268-278, March 1973 dont l'intérêt majeur est de permettre une prise de décisions au « fil de l'eau », sans perte d'optimalité. en clair, il n'est pas nécessaire d'avoir reçu l'intégralité du message pour commencer à prendre des décisions sur la suite des symboles la plus vraisemblable.

Cependant, et à titre d'exemple, pour un signal modulé à quatre états de phase, émis au travers d'un canal de réponse impulsionnelle discrète de longueur 15 (étalement temporel de l'ordre de 15 T), le treillis associé à un tel système comporte un milliard d'états possibles ce qui rend, de facto, ce type de récepteur parfaitement irréalisable, du moins dans le cas d'applications temps réel. Dans un certain nombre d'applications, un tel étalement temporel est courant, c'est le cas des canaux acoustiques sous-marins, des canaux ionosphériques, des lignes téléphoniques (paires torsadées) et ce pourrait, d'un point de vue général, être le cas de tous les canaux de transmission, si on procédait à une augmentation importante des débits dans la bande allouée.

En effet, on cherchera de toute évidence à acheminer des débits de plus en plus importants sur ce type de canaux, ce qui se traduira inexorablement par un allongement du support temporel de la réponse impulsionnelle. C'est en ce sens que les égaliseurs à retour de décision constituent une alternative intéressante aux récepteurs optimaux dès lors que la réponse impulsionnelle discrète est de dimension importante. Ainsi, sur l'actuel standard GSM de communications radio-mobiles, l'étalement temporel est de l'ordre de 6T, ce qui pour une modulation binaire représente 64 états et se prête alors bien à l'utilisation d'une technique de réception optimale. Si maintenant, pour des raisons évidentes d'accroissement de débit en ligne, on passe à une modulation quaternaire et que l'on cherche parallèlement à augmenter la rapidité de modulation dans un facteur 2, on se retrouve avec un nombre d'états de l'ordre de 17 millions, ce qui devient clairement prohibitif. C'est pour cette raison que les égaliseurs à retour de décisions (ERD), quoique théoriquement sous-optimaux, présentent un intérêt majeur évident en termes de compromis complexité-performances, sous réserve cependant d'en maîtriser le comportement potentiellement pathologique.

Comme on l'a déjà mentionné précédemment, la méthode classiquement employée sur les canaux sévères consiste à émettre une séquence d'apprentissage périodique de façon à pouvoir recaler l'ERD, le cas échéant. Ceci se fait au détriment de l'efficacité spectrale qui peut alors en être fortement affectée. C'est la raison profonde qui explique l'existence de nombreux travaux actuels en matière d'égalisation aveugle (autodidacte, non supervisée). L'objectif est de faire converger le dispositif vers sa solution optimale, sans l'aide de séquences d'apprentissage, c'est à dire, en l'occurrence, à partir de la seule connaissance de la statistique du signal émis par la source. Plusieurs auteurs ont, à ce titre, apporté une contribution non négligeable, parmi lesquels :

[5] Y. Sato, « A method of self-recovering equalization for multilevel amplitude modulation », IEEE Trans. on Com., COM-23, pp. 679-682, June 1975.
[6] D.N. Godard, « Self-recovering equalization and carrier tracking in two-dimensional data communication systems », IEEE Trans. on Com., COM-28, pp. 1867-1875, November 1980.
[7] A. Benveniste, M. Goursat, « Blind equalizers », IEEE Trans. on Com., vol.32, 1984, pp. 871-883.
[8] O. Shalvi & E. Weinstein, « New criteria for blind deconvolution of nonminimum phase systems (channels) », IEEE Trans. on IT, vol. 36, N° 2, March 1990, pp. 312-321.
[9] C.A. F Da Rocha, O. Macchi and J.M.T. Romano, « An adaptive nonlinear IIR filter for self-learning equalization », ITC 94, Rio de Janeiro, Brazil, pp. 6-10, 1994.
[10] B. Porat, B. Friedlander, « Blind Equalization of digital communication channels using high order moments" » Trans. on SP, vol. 39, pp. 522-526, Feb 1991.
[11] V. Shtrom & H. Fan, « New Class of Zero-Forcing Cost Functions in Blind Equalization », IEEE Trans. on SP, vol.46, N° 10, October 1998, pp. 2674-2683.

Tous ces algorithmes font implicitement référence à des statistiques d'ordre supérieur à deux. Ceci est lié au fait qu'un canal à phase minimale nécessite, pour son inversion, l'utilisation de tels moments. Les premiers égaliseurs de ce type étaient généralement linéaires et transverses, c'est à dire de réponse impulsionnelle finie.

Très récemment, une solution élégante et particulièrement efficace fut introduite par Labat et al dans :

[12] J. Labat, C. Laot & O. Macchi, « Dispositif d'égalisation adaptatif pour systèmes de communications numériques », Brevet français 9510832

[13] J. Labat, O. Macchi & C. Laot, « Adaptive decision feedback equalization : can you skip the training period ? « IEEE Trans. on Com., vol.46, n°7, pp. 921-930, July 98.

Ce nouvel égaliseur temporel, dont on se propose de rappeler la description, comporte deux modes de fonctionnement, adaptés à la sévérité du canal de transmission. Dans le mode initial, appelé mode de convergence et représenté sur la figure 3, le dispositif est constitué de la cascade d'un filtre blanchissant purement récursif 4, d'un filtre transverse 5, d'un contrôle automatique de gain (CAG) 6 et d'un correcteur de phase 7. L'originalité du dispositif est lié au fait que chaque étage est adapté selon un critère spécifique, ce qui lui confère à la fois robustesse et rapidité de convergence. Lorsque le processus d'égalisation est suffisamment avancé, ce qui peut être apprécié à l'examen de l'erreur quadratique moyenne (EQM) estimée (à partir des décisions prises par le récepteur), la structure et les critères d'adaptation de l'égaliseur sont modifiés de telle sorte que le dispositif se transforme en un égaliseur à retour de décisions (ERD) conventionnel (figure 4). Le caractère réversible de cette modification apporte au nouvel égaliseur un avantage substantiel au sens où chaque fois qu'il le peut, il tire profit de ses propres décisions sans risque de divergence, contrairement aux ERD conventionnels. En effet, si brutalement les conditions de transmission viennent à se modifier, le nouvel égaliseur reprend sa configuration initiale, ce qui lui permet de se réadapter à la nouvelle situation. Dans ces conditions, la question du choix entre un dispositif linéaire et un égaliseur de type ERD n'a plus réellement lieu d'être posée car ce nouvel égaliseur est toujours capable de choisir la configuration lui permettant d'atteindre les meilleures performances.

## PRESENTATION DE L'INVENTION

Un but de l'invention est de proposer un égaliseur multi-voies, notamment spatio-temporel (c'est à dire un égaliseur apte à exploiter les signaux relevés simultanément par plusieurs capteurs en parallèle), qui soit particulièrement performant.

A cet effet, l'invention propose un dispositif selon la revendication 1.

Un tel dispositif est avantageusement complété par les différentes caractéristiques suivantes prises seules ou selon leurs combinaisons techniquement possibles :

- il comporte des moyens pour modifier les critères d'actualisation des parties transverse et récursive que le dispositif fonctionne en mode normal ou en mode de convergence ou de réceptions difficiles.
- en mode de convergence ou de réceptions difficiles, les filtres récursifs sont actualisés selon un critère quadratique, les filtres transverses étant actualisés selon un critère statistique d'ordre supérieur à deux.
- il comporte des moyens pour le piloter, en mode de poursuite ou de réceptions faciles, de façon à minimiser l'erreur quadratique moyenne estimée.
- le degré de performance est déterminé en fonction d'une estimation de l'erreur quadratique moyenne.
- en mode de convergence, les moyens de correction de phase sont disposés au voisinage immédiat des moyens de décisions.
- il comporte des moyens de contrôle automatique de gain.
- en mode de poursuite ou de réceptions faciles, les moyens de contrôle automatique de gain sont constitués par les moyens formant filtres transverses
- en mode de convergence, les moyens de contrôle automatique de gain est situé en amont des filtres récursifs.

L'invention concerne également un dispositif d'égalisation de type fractionné, dans lequel les données reçues sont distribuées par fractionnement sur plusieurs voies, caractérisé en ce qu'il est constitué par un dispositif du type précité.

Elle concerne en outre un système de transmission à flot continu de données ou un système de transmission de données par paquets, caractérisé en ce qu'il comporte un dispositif d'égalisation du type précité.

Un tel égaliseur spatio-temporel est autodidacte à retour de décisions et à configuration variable. En fonction d'un signal élaboré en ligne tel que l'erreur quadratique moyenne estimée, ou le kurtosis du signal de sortie de l'égaliseur ou, de façon plus générale, n'importe quelle fonction coût pertinente (Godard [6], Shalvi & Weinstein [8], Shtrom & Fan [11], ...), l'égaliseur se configure de façon « optimale », en termes de structure et de critères d'optimalité. Dans son mode de fonctionnement initial, appelé mode de convergence, le dispositif est linéaire et récursif tandis que, dans son mode de fonctionnement normal, appelé mode de poursuite, ce dispositif devient l'ERD spatio-temporel classique piloté par ses propres décisions. Le passage de l'une à l'autre de ces deux configurations est parfaitement réversible, ce qui le rend particulièrement attrayant dans le cas de canaux non stationnaires. De ce fait, le dispositif proposé par l'invention permet d'atteindre des performances très intéressantes tant sur le plan de la convergence qu'en matière de poursuite. Cette propriété essentielle lui permet de s'adapter aux fluctuations du canal dans des situations sévères, à la différence des égaliseurs classiques de l'art antérieur. De ce point de vue, le dispositif proposé par l'invention est particulièrement bien adapté aux canaux non stationnaires tels que les canaux radiomobiles, ionosphériques, troposphériques et acoustiques sous marins.

## PRESENTATION DES FIGURES

D'autres caractéristiques et avantages de l'invention ressortiront encore de la description qui suit. Cette description est purement illustrative et non limitative. Elle doit être lue en regard des dessins annexés sur lesquels :

- la figure 1 est un schéma de principe d'un égaliseur linéaire transverse temporel.
- la figure 2 est un schéma de principe d'un égaliseur à retour de décision temporel.
- la figure 3 est un schéma qui illustre la structure, en mode de convergence, d'un égaliseur temporel précédemment proposé [12].
- la figure 4 est un schéma qui illustre la structure, en mode de poursuite, du même égaliseur temporel.
- la figure 5 est un schéma qui illustre la structure, en mode de convergence, d'un égaliseur spatio-temporel conforme à un mode de réalisation possible pour l'invention.
- la figure 6 est un schéma qui illustre la structure, en mode de poursuite, d'un égaliseur spatio-temporel conforme à un mode de réalisation possible pour l'invention.
- la figure 7 est un schéma qui illustre la structure, en mode de convergence, d'un égaliseur spatio-temporel fractionné conforme à un mode de réalisation possible pour l'invention.
- la figure 8 est un schéma qui illustre la structure, en mode de convergence, d'un égaliseur spatio-temporel fractionné conforme à un mode de réalisation possible pour l'invention.
- les figures 9 à 11 sont des graphes sur lesquels on a respectivement porté des courbes d'erreur quadratique moyenne, de sortie de corrélateur ainsi que des constellations d'entrée et de sortie dans le cas d'un égaliseur à retour de décision entraîné synchrone, pour un, deux et quatre voies de réception.
- les figures 12 à 14 sont des graphes sur lesquels on a respectivement porté des courbes d'erreur quadratique moyenne, de sortie de corrélateur ainsi que des constellations d'entrée et de sortie dans le cas d'un égaliseur à retour de décision autodidacte synchrone, pour un, deux et quatre voies de réception.
- les figures 15 à 17 sont des graphes sur lesquels on a respectivement porté des courbes d'erreur quadratique moyenne, de sortie de corrélateur ainsi que des constellations d'entrée et de sortie dans le cas d'un égaliseur à retour de décision entraîné fractionné, pour un, deux et quatre voies de réception.
- les figures 18 à 20 sont des graphes sur lesquels on a respectivement porté des courbes d'erreur quadratique moyenne, de sortie de corrélateur ainsi que des constellations d'entrée et de sortie dans le cas d'un égaliseur à retour de décision autodidacte fractionné, pour un, deux et quatre voies de réception.

## DESCRIPTION DE MODES DE REALISATION DE L'INVENTION

### PRESENTATION GENERALE

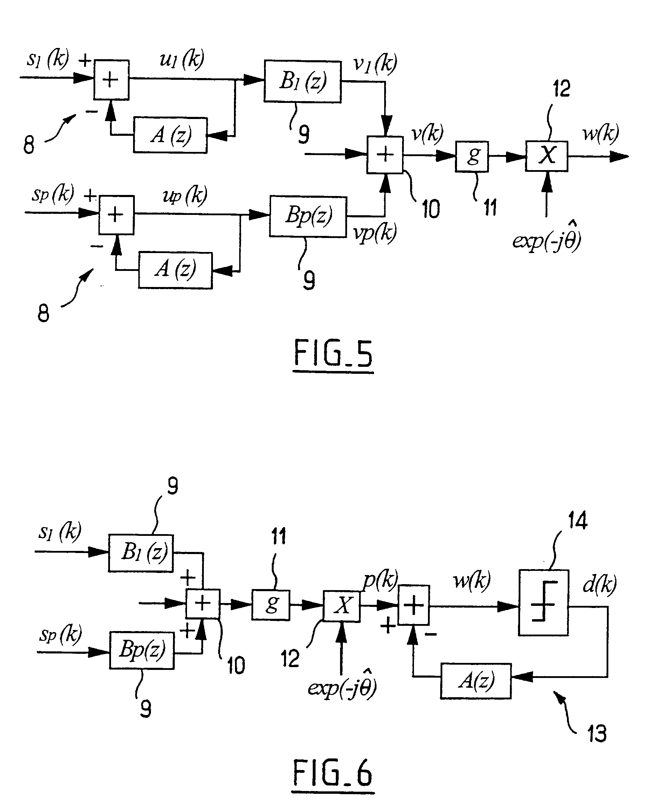

Le dispositif d'égalisation multi-voies proposée par l'invention présente deux structures différentes selon que l'on est en mode de convergence (mode 1) ou en mode de poursuite (mode 2), c'est à dire en régime de fonctionnement normal. Ces deux structures sont illustrées par les figures 5 et 6.

Dans la structure utilisée pendant le mode de convergence (figure 5), un filtre purement récursif 8 précède un filtre transverse 9 sur chacune des P voies utilisées par l'égaliseur spatio-temporel. Plus en aval, après le sommateur 10, se trouvent respectivement un contrôle automatique de gain 11 et un correcteur de phase 12. Tous ces éléments sont adaptés à partir de critères « aveugles », c'est à dire ne faisant aucunement intervenir la connaissance des données émises mais simplement la connaissance a priori de leurs propriétés statistiques.

Dans le mode de poursuite, la place des filtres transverses et récursifs est modifiée de telle sorte que le dispositif se configure en ERD spatio-temporel conventionnel (figure 6). Le critère d'optimalité global devient alors celui de la minimisation de l'erreur quadratique moyenne (EQM) estimée. Dans ce mode de fonctionnement, le CAG est généralement inhibé, c'est à dire bloqué à la valeur antérieure à la modification structurelle. On assiste donc parallèlement à une modification structurelle et à un changement des critères d'optimalité. Ainsi, selon le degré de sévérité du canal et à partir d'un signal élaboré en ligne, qui mesure la performance du dispositif comme, par exemple l'erreur quadratique, ou le kurtosis (cumulant d'ordre 4) du signal de sortie $w(k)$, ou toue autre fonction coût estimée en ligne (Godard [6], Shalvi & Weinstein [8], Shtrom et Fan [11], ..), le dispositif bascule d'une structure linéaire récursive autodidacte telle qu'illustrée sur la figure 5 à une structure non linéaire d'ERD spatio-temporel telle que représentée sur la figure 6 ou, à l'inverse, d'une structure de type ERD pilotée par décision à une structure récursive linéaire autodidacte. Les structures correspondant d'une part en mode de convergence et d'autre part en mode de poursuite vont maintenant être décrites.

Naturellement, dans son mode de convergence, le dispositif étant linéaire, la place des différents éléments constituant l'ERD spatio-temporel peut être modifiée. Cette modification concerne notamment le CAG qui peut être placé en plusieurs endroits de la chaîne et même éventuellement supprimé (ce qui revient à faire g=1 ), les filtres transverses se chargeant alors d'assurer cette fonction. Ainsi, de manière illustrative mais non limitative, le CAG peut être situé directement en amont ou en aval du correcteur de phase, ou encore en amont ou en aval du filtre purement récursif. Pour ce qui concerne le correcteur de phase chargé d'effectuer l'opération de « récupération de porteuse » ("carrier recovery" selon la terminologie anglosaxonne), bien que, d'un point de vue théorique, il puisse être situé en n'importe quel point de la chaîne, il est clair que sa position idéale se situe au voisinage immédiat du circuit de décision. Ceci est lié au critère généralement utilisé pour l'adaptation, à savoir la minimisation de l'erreur quadratique moyenne estimée. Néanmoins, d'autres critères plus robustes utilisant des techniques de l'art actuel peuvent également être utilisées.

## 1) Mode 1 : mode de convergence et/ou périodes de réception difficiles.

La structure correspondant à la configuration de convergence illustrée à la figure 5 comporte sur chacune des P voies correspondant aux P capteurs de l'antenne un filtre purement récursif 8, identique sur chaque voie, de fonction de transfert $1/[1+A(z)]$, des filtres transverses 9 de fonction de transfert $B_i(z)$, i=1, 2, .., P, d'un sommateur 10, d'un dispositif de contrôle automatique de gain 11 et d'un correcteur de phase 12.

La place respective du CAG et du correcteur de phase (récupération de porteuse) n'a a priori aucune importance sur le plan théorique, du moins dans une stratégie non adaptative. Ainsi le CAG (caractérisé par g) peut-il être situé en amont ou en aval des filtres purement récursifs ou encore en amont ou en aval du dispositif de correction de phase, voire supprimé. Une position parmi d'autres est celle illustrée sur la figure 5.

Le gain g du dispositif 11 est actualisé selon un critère aveugle, les filtres récursifs sur un critère quadratique et les filtres transverses sur un critère impliquant des statistiques d'ordre supérieur à deux. Pour l'actualisation des coefficients des filtres transverses, plusieurs algorithmes peuvent être utilisés et notamment ceux de Godard [6], Shalvi & Weinstein [8], Shtrom & Fan [11], etc.

La récupération de porteuse ou correction de phase, c'est à dire l'estimation de l'erreur de phase et sa compensation sous forme d'une multiplication complexe par $\exp(-j\theta)$, s'effectue par exemple selon un critère de minimisation d'erreur quadratique moyenne estimée. Le signal d'erreur élaboré peut ensuite être filtré de telle sorte à retomber sur un dispositif du second ordre (ou d'ordre supérieur à 2 si nécessaire). Ce dispositif peut lui aussi être situé en divers points de la chaîne du fait de la linéarité du dispositif. Néanmoins, en pratique, du moins pour le critère considéré, il paraît judicieux de le situer en aval de l'égaliseur. Dans ce mode de convergence, la correction de phase peut être pilotée par décisions, encore que d'autres critères plus robustes, exploitant la symétrie de la constellation du signal émis, puissent être envisagés. En tout état de cause, les autres fonctions sont optimisées à partir de critères ne s'appuyant en rien sur les décisions prises par le dispositif approprié (circuit à seuils). Cette première étape est, en conséquence, parfaitement autodidacte (aveugle, non supervisée). De plus, chacun des dispositifs élémentaires possède un critère d'optimalité approprié, ce qui confère à l'ensemble un caractère très robuste.

## 2) Mode 2 : mode de poursuite et/ou périodes de réception faciles.

Dès lors que le canal est pratiquement égalisé, ce que l'on peut déduire de l'observation de l'EQM estimée, du kurtosis, ou tout autre fonction coût (Godard [6], Shalvi & Weinstein [8], Shtrom & Fan [11],..), les filtres linéaires 8 purement récursifs de fonction de transfert $1/[1+A(z)]$, sont remplacés par un filtre unique de même fonction de transfert 13 qui subit le changement de place indiqué sur la figure 6 et qui est désormais alimenté par les décisions $\hat{d}$ (k) prises par le circuit de décision, référencé par 14, du dispositif. La mise en facteur de cette fonction nécessite évidemment d'avoir, dans le mode de convergence 1, un filtre récursif identique sur les P voies de l'ERD spatio-temporel. La nouvelle structure obtenue est celle de l'ERD spatio-temporel conventionnel, piloté par décisions, selon le critère de minimisation de l'erreur quadratique moyenne estimée. En outre si la donnée décidée est jugée de vraisemblance faible, on peut alors faire le choix de réinjecter le signal w(k) en entrée du circuit de décision dans le filtre A(z), en lieu et place de la donnée décidée $\hat{d}$ (k).

En effet, on considère qu'il vaut mieux, ponctuellement, injecter une donnée bruitée w(k) dans le filtre récursif A(z) plutôt que ^rendre le risque d'y injecter une donnée décidée $\hat{d}$(k) de vraisemblance faible (donc probablement erronée). Cette façon de procéder est susceptible de rendre le dispositif plus robuste en mode de poursuite et constitue, à ce titre, une amélioration potentielle de l'ERD spatio-temporel). Par ailleurs, dans ce mode de poursuite, le CAG peut être intégré dans les filtres transverses $B_i(z)$ en bloquant g à sa valeur précédente.

Ainsi, comme on l'aura compris, l'égaliseur spatio-temporel présente deux modes de fonctionnement différents associés à des structures et des critères d'optimalité différents.

Une des caractéristiques essentielles du nouveau dispositif est que cette modification structurelle est parfaitement réversible. Une telle propriété est intéressante et permet, en cas de situations sévères, de revenir au mode de convergence, c'est à dire à un mode de fonctionnement très robuste. En revanche, dès lors que la sévérité du canal s'atténue, cela se traduit par une diminution de l'erreur quadratique moyenne associée, et le système bascule alors de nouveau en mode de poursuite, c'est à dire vers une structure d'égaliseur à retour de décisions et ainsi de suite. En cela le dispositif présente un caractère original et particulièrement attrayant.

Parallèlement à cette permutation structurelle, il est procédé à un changement de critères nécessaires à l'actualisation des coefficients des parties transverses et récursives. Dans le mode 1, ces critères reposent exclusivement sur la connaissance a priori de la statistique du signal émis par la source tandis que dans le mode de poursuite, le critère d'optimalité est celui de la minimisation de l'EQM estimée.

*DESCRIPTION DETAILLEE D'UN EXEMPLE DE REALISATION*

On va maintenant décrire de façon détaillée un exemple de réalisation du dispositif d'égalisation spatio-temporelle, objet de l'invention.

**1) <u>Mode de convergence et/ou périodes de réception difficiles.</u>**

**1-1 <u>Equations de fonctionnement.</u>**

Les équations qui régissent le fonctionnement du dispositif sont les suivantes :
Pour i=1, 2, .., P, on a :

$$u_i(k) = s_i(k) - \sum_{l=1}^{N} a_l u_i(k-l) = s_i(k) - A^T U_{i,N}(k) \qquad \text{I-1}$$

où $s_i(k)$ désigne le signal en entrée de la voie i au temps k, $u_i(k)$ désigne le signal en sortie du filtre 8 de la voie i, et où

$$A = [a_1, a_2, ..., a_N]^T \qquad \text{I-2}$$

$$U_{i,N}(k) = (u_i(k-1), u_i(k-2), ..., u_i(k-N))^T \qquad \text{I-3}$$

On a également:

$$v_i(k) = \sum_{l=0}^{L} b_{i,l} u_i(k-l) = B_i^T U_{i,L+1}(k) \qquad \text{I-4}$$

où $v_i(k)$ désigne le signal en sortie du filtre transverse 9 de la voie i et où

$$U_{i,L+1}(k) = (u_i(k), u_i(k-1), ..., u_i(k-L))^T \qquad \text{I-5}$$

$$B_i = [b_{i,0}, b_{i,1}, ..., b_{i,L}]^T \qquad \text{I-6}$$

On a en outre :

$$v(k) = \sum_{i=1}^{P} v_i(k) \qquad \text{I-7}$$

$$w(k) = v(k)g(k-1)\exp[-j\hat{\theta}(k-1)] \qquad \text{I-8}$$

A titre d'exemple les vecteurs $B_i$ peuvent être initialisés avec $B_i(0)=[0, 0, ..., 1/P, 0, 0]^T$ tandis que C(0) est le vecteur nul de dimension N.

### 1-2 Actualisation des paramètres en mode de convergence.

#### 1-2-1 Filtre purement récursif

Le critère d'optimisation utilisé pour l'adaptation du filtre récursif est la minimisation de la fonction coût :

$$E\left\{|u_1(k)|^2 + .. + |u_P(k)|^2\right\} = \sum_{i=1}^{P} E\left\{|u_i(k)|^2\right\} \qquad \text{I-9}$$

On peut pour cela utiliser une technique algorithme de type « gradient stochastique » ou moindres carrés récursifs. Nous donnons ci-après l'équation d'actualisation découlant de l'algorithme du gradient stochastique :

$$A^T(k) = A^T(k-1) + \mu_a \sum_{i=1}^{P} u_i(k)U_{i,N}^{\bullet}(k) \qquad \text{I-10}$$

Avec $\mu_a$ un pas d'adaptation approprié.

#### 1-2-3 Filtres transverses.

Le signal v(k) peut s'écrire de façon plus concise :

$$v(k) = \sum_{i=1}^{P} v_i(k) = B^T(k-1)U(k) \qquad \text{I-11}$$

Avec

$$B^i = \left[ B_1^i, B_2^i, ..., B_P^i \right] \qquad \text{I-12}$$

$$U^T(k) = \left[ U_{1,L+1}^T(k), U_{2,L+1}^T(k), ..., U_{P,L+1}^T(k) \right] \qquad \text{I-13}$$

Les critères utilisés pour l'actualisation sont, de manière non limitative, ceux de Godard [6], de Shalvi & Weinstein [8] ou de Shtrom et Fan [11]. A titre purement indicatif, on rappelle que la fonction coût définie par Godard est la suivante :

$$J_{G_i}(B) = E\left\{\left[\|v(k)\|^{p} - R_{p}\right]^{2}\right\} \quad \text{avec } R_{p} = \frac{E\left\{|d(k)|^{2p}\right\}}{E\left\{|d(k)|^{p}\right\}} \qquad \text{I-14}$$

En pratique le paramètre p est choisi égal à 2 mais d'autres valeurs sont également possibles. Le critère proposé par Shalvi & Weinstein est le suivant :

$$J_{SW}(B) = E\left\{|v(k)|^{4}\right\} \text{ avec la contrainte } E\left\{|v(k)|^{2}\right\} = \sigma_{d}^{2} \qquad \text{I-15}$$

Shtrom et Fan ont proposé un certain nombre de fonctions coûts pouvant également être utilisées pour l'actualisation des filtres transverses et qui sont parfaitement décrites dans [11]. D'une manière générale, les algorithmes qui découlent de ces critères ont été décrits dans les articles cités en référence, du moins dans leur version gradient stochastique. A des fins purement illustratives, on rappelle la relation d'actualisation découlant de l'algorithme de Godard (p=2) :

$$B_{i}(k) = B_{i}(k-1) - \mu_{b} v(k) \left[\|v(k)\|^{2} - R_{2}\right] U_{i,i+1}^{\bullet}(k) \text{ pour i=1,2,\ldots,P} \qquad \text{I-16}$$

Avec $\mu_{b}$ un pas d'adaptation approprié.

Comme déjà évoqué, et à titre purement indicatif, le coefficient de référence peut être choisi égal à 1/P pour chacun des filtres $B_i$, tandis que sa position est laissée libre. En pratique, la position de ces coefficients, qui conditionne le retard de restitution de l'égaliseur, est choisie de telle sorte que ces filtres soient plutôt à tendance anticausale.

### *1-2-4 Correction de phase.*

Un critère possible est la minimisation de l'EQM estimée (à partir des données décidées). Ce critère est alors clairement piloté par décisions, donc moins robuste, d'où la position du dispositif en aval de la chaîne, de façon à ne pas perturber les étages amont. La fonction coût a alors pour expression :

$$K(\theta) = E\left\{\left|v(k)e^{-j\hat{\theta}(k-1)} - \hat{d}(k)\right|^{2}\right\} \qquad \text{I-17}$$

L'algorithme d'actualisation qui en découle est le suivant :

$$\in(k) = \text{Im}\left\{w(k)[\hat{d}(k) - w(k)]^{\bullet}\right\} \qquad \text{I-18}$$

$$e(k) = (\in \otimes f)(k) \qquad \text{et} \qquad Z\{f(k)\} = G_{1} + \frac{G_{2}}{1 - z^{-1}} \qquad \text{I-19}$$

$$\hat{\theta}(k) = \hat{\theta}(k-1) + \mu_{\theta} e(k) \qquad \text{I-20}$$

Avec $\mu_{\theta}$ un pas d'adaptation approprié.

*1-2-5 Contrôle automatique de gain.*

Bien que le dispositif de contrôle de gain ne soit pas indispensable, il peut être intéressant, dans certains cas, de le prévoir. Là encore, compte tenu de la linéarité de la structure, la position de ce dispositif peut être choisie de manière arbitraire. Une position parmi d'autres est celle représentée sur la figure 5. Dans ce cas, un algorithme possible pour l'actualisation du gain g correspond à l'équation d'actualisation suivante :

$$G(k) = G(k-1) + \mu_g \left[ \sigma_d^2 - \left| w(k) \right|^2 \right] \qquad \text{I-21}$$

$$g(k) = \sqrt{|G(k)|} \qquad \text{ou} \qquad g(k) = |G(k)| \qquad \text{I-22}$$

Avec G(0)=1 et $\mu_g$ un pas d'adaptation approprié tandis que $\sigma_d^2$ désigne la variance des données émises par la source.
Une solution également intéressante, en termes de stabilité, est de situer le CAG, caractérisé par g, en amont des filtres purement récursifs de fonction de transfert 1/[1+A(z)]. Un algorithme possible pour l'actualisation du gain g correspond à l'équation d'actualisation suivante :

$$G(k) = G(k-1) + \mu_g \left[ \sigma_d^2 - \sum_{i=1}^{P} \left| u_i(k) \right|^2 \right] \qquad \text{I-21bis}$$

$$g(k) = \sqrt{|G(k)|} \qquad \text{ou} \qquad g(k) = |G(k)| \qquad \text{I-22bis}$$

## 2- Règle de commutation.

Pour commander le mode de fonctionnement courant (convergence ou poursuite), un signal permettant d'évaluer le degré de performance de l'égaliseur est élaboré en ligne. Pour cela, on peut, par exemple, déterminer l'EQM estimée $M_{DD}(k)$ selon l'algorithme :

$$M_{DD}(k) = \lambda M_{DD}(k-1) + (1-\lambda) \left| \hat{d}(k) - w(k) \right|^2 \qquad \text{I-23}$$

ou toute autre fonction coût élaborée selon le même principe, par exemple et pour illustrer le propos, celle de Godard [6] estimée selon :

$$E_G(k) = \lambda E_G(k-1) + (1-\lambda) \left[ \left| v(k) \right|^p - R_p \right]^2 \qquad \text{I-24}$$

Où $\lambda$ désigne un facteur d'oubli.
Dans le cas où l'EQM estimée est utilisée comme signal de contrôle, le choix de la configuration est alors effectué conformément à l'algorithme suivant :

$$\begin{cases} M_{DD}(k_0) \geq M_0 \mod e \ de \ convergence \ si \ k > k_0 \\ M_{DD}(k_0) < M_0 \mod e \ de \ poursuite \ si \ k > k_0 \end{cases} \qquad \text{I-25}$$

En clair, quant l'EQM estimée $M_{DD}(k)$ est supérieure à un seuil $M_0$, l'égaliseur est en mode de convergence tandis qu'au contraire lorsqu'il est inférieur à $M_0$, il est en mode de poursuite.

On observe que dans ce cas l'EQM estimée est alors très proche de l'EQM vraie. Pour assurer une transition sûre en mode d'ERD, le seuil doit être choisi suffisamment petit. En outre, d'une manière générale, lorsque l'EQM décroît la probabilité d'erreur décroît également. Il s'agit donc de déterminer un seuil correspondant à un TEB suffisamment faible, typiquement de l'ordre de 0.02 pour éviter un comportement pathologique de l'égaliseur. Si l'on considère que dans son mode de convergence l'égaliseur est de type Zero-Forcing, le TEB peut s'exprimer en fonction de l'EQM. ainsi, pour une MAQ-4, une telle contrainte conduit à choisir un seuil $M_0=0.25$ (-6 dB). On remarquera que, dans ce cas, l'EQM estimée est en général très proche de l'EQM vraie et constitue donc, à ce titre, un bon indice de performance pour commander le mode de fonctionnement de l'égaliseur.

### 3-Mode de poursuite et/ou périodes de réception faciles.

Ce mode de fonctionnement commence lorsqu'un signal élaboré en ligne tel que l'EQM estimée franchit un seuil adapté à la modulation utilisée (par exemple 0.25 pour la MDP4). Dans ce cas, on permute la position des filtres transverses et du filtre récursif pour obtenir l'ERD spatio-temporel conventionnel. En clair, l'égaliseur passe d'une structure récursive linéaire à une structure récursive non linéaire et vice versa en fonction de la sévérité du contexte. Dans ce mode de fonctionnement le critère est alors unique, à savoir la minimisation de l'EQM estimée. Ce critère est utilisé pour l'actualisation de tous les paramètres de l'égaliseur, à partir d'un algorithme de type gradient stochastique ou moindres carrés récursifs (Recursive Least Square) ou tout autre algorithme correspondant à l'état de l'art actuel. Le contrôle automatique de gain caractérisé par g est généralement bloqué à sa valeur antérieure, cette fonction étant alors automatiquement réalisée par les différents filtres transverses. En revanche, le correcteur de phase est maintenu, mais sa position peut également être modifiée conformément au schéma de la figure 6.

### 3-1 Equations de fonctionnement.

Les équations qui régissent ce mode de fonctionnement sont les suivantes :

$$p(k) = g(k-1)\exp(-j\hat{\theta}(k-1))\sum_{i=1}^{P} B_i^T(k-1)S_i(k) \qquad \text{II-1}$$

Avec

$$S_i(k) = (s_i(k),\ s_i(k-1),...,\ s_i(k-L))^T \qquad \text{II-2}$$

et

$$w(k) = p(k) - A^T(k-1)D(k) \qquad \text{II-3}$$

Avec

$$D(k) = (\hat{d}(k-1),\ \hat{d}(k-2),...,\ \hat{d}(k-N))^T \qquad \text{II-4}$$

### 3-2 Actualisation des paramètres en mode de poursuite

#### 3-2-1 Filtres transverses

Les équations d'actualisation des filtres $B_i(z)$ de l'égaliseur spatio-temporel sont alors :

$$B_i(k) = B_i(k-1) + \mu_h g(k-1)\exp(j\hat{\theta}(k-1))\left[\hat{d}(k) - w(k)\right]S_i^*(k) \quad i = 1,2,....P \qquad \text{II-5}$$

### 3-2-3 Filtre récursif

$$A^{T}(k) = A^{T}(k-1) - \mu_{a}\left[\hat{d}(k) - w(k)\right]D^{*}(k) \qquad \text{II-6}$$

### 3-2-4 Correcteur de phase

L'algorithme d'actualisation est le suivant :

$$\in (k) = \text{Im}\left\{p(k)[\hat{d}(k) - w(k)]^{*}\right\} \qquad \text{II-7}$$

$$e(k) = (\in \otimes f)(k) \qquad \text{et} \qquad Z\{f(k)\} = G_{1} + \frac{G_{2}}{1 - z^{-1}} \qquad \text{II-8}$$

$$\hat{\theta}(k) = \hat{\theta}(k-1) + \mu_{\theta}e(k) \qquad \text{II-9}$$

Avec $\mu_{\theta}$ un pas d'adaptation approprié.

*Cas particulier.*

Il est important de remarquer que dans le cas de la modulation à déplacement de phase à deux états (MDP2 ou Binary Phase Shift Keying en anglo-américain), le critère quadratique optimal est la minimisation de la fonction coût suivante :

$$EQM_{mdp2} = E\left\{\left[Re\left\{w(k) - \hat{d}(k)\right\}\right]^{2}\right\}$$

Les équations qui en découlent se déduisent alors directement, sans problème particulier. S'agissant de la MDP2, ce critère est le plus pertinent des critères quadratiques. En outre, dans le mode de convergence, le critère pertinent pour l'adaptation du vecteur A du filtre récursif est la minimisation de la fonction coût suivante :

$$E\left\{Re\left\{|u_{1}(k)|^{2}\right\} + .. + Re\left\{|u_{p}(k)|^{2}\right\}\right\} = \sum_{i=1}^{p} E\left\{Re\left\{|u_{i}(k)|^{2}\right\}\right\}$$

Sous réserve de contraindre les coefficients du vecteur à être réels. Les équations qui en découlent s'obtiennent directement. Les autres critères sont en tout point similaires aux précédents sauf en ce qui concerne la correction de phase qui utilise la minimisation de l'EQM$_{mdp2}$.

Dans ce qui précède, on a décrit les deux modes de fonctionnement d'un ERD spatio-temporel autodidacte conforme à un mode de réalisation possible de l'invention. Les réalisations d'actualisation précédemment développées découlent de l'algorithme du gradient stochastique. Naturellement, elles peuvent être également obtenues par une technique de type moindres carrés, moindres carrés rapides ou toute autre technique correspondant à l'état de l'art actuel.

Le niveau de performances atteint par ce dispositif est remarquable car en cas de dégradation du canal, le dispositif se configure alors automatiquement dans le mode de convergence. Au contraire dès que le canal s'améliore, ce qui est détecté à partir d'un signal en ligne, notre dispositif se configure en mode de poursuite et ainsi de suite.

Enfin, le principe de l'égaliseur qui vient d'être présenté, objet de l'invention, peut s'étendre aux égaliseurs de type fractionné (fractionnaly spaced equalizers), c'est à dire utilisant des échantillons temporellement espacés d'une durée élémentaire inférieure à T, par exemple T/2.

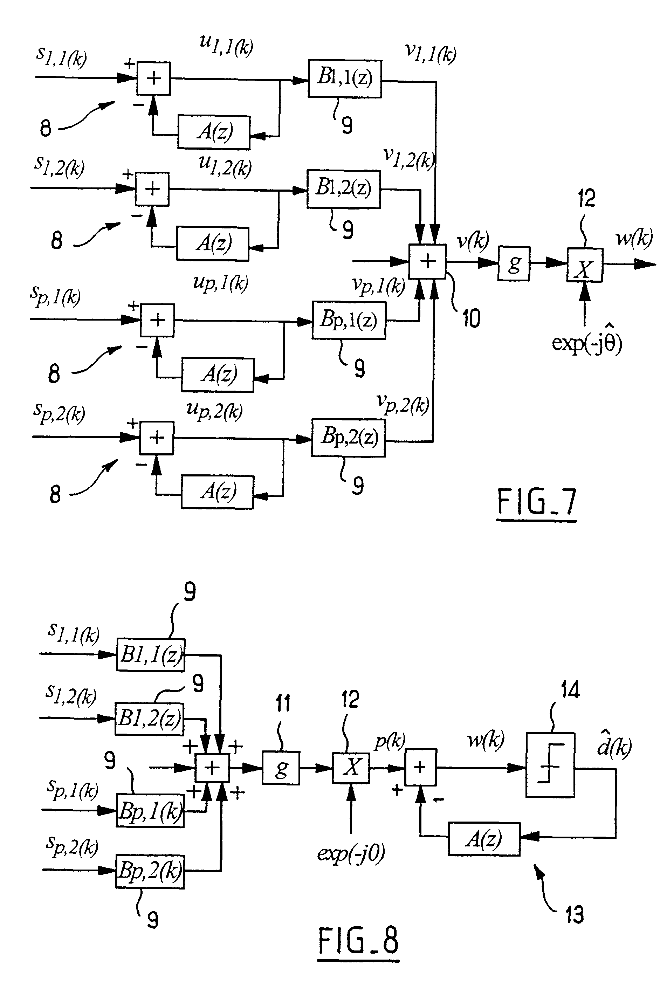

Un tel dispositif est parfaitement décrit par les schémas des figures 7 et 8. Pour cela, en considérant un égaliseur fractionné utilisant des échantillons prélevés à une cadence 2/T, ce qui correspond à une pratique très courante, on définit les signaux $s_{i,j}(k)$ de la façon suivante :

$$S_{1,1}(k)=s_1(kT]$$

$$S_{1,2}(k)=s_1[kT-T/2]$$

$$S_{p,1}(k)=s_p[kT]$$

$$S_{p,2}(k)=s_p[kT-T/2]$$

Pour les autres signaux apparaissant sur les figures 7 et 8, on a adopté le même principe en ce qui concerne la notation.

Dans son mode de poursuite les équations d'actualisation sont celles de l'ERD fractionné conventionnel correspondant à l'état de l'art. pour ce qui concerne le mode de convergence, il suffit de considérer les échantillons intermédiaires $s_{n,2}(k)=s_n[kT-T/2]$ comme émanant d'un second capteur et dès lors les équations précédentes s'appliquent intégralement au nouveau dispositif qui peut, d'un point de vue général, être vu comme un ERD spatio-temporel à 2P capteurs.

*APPLICATIONS*

Le dispositif précédemment décrit est directement applicable aux systèmes de communications à flot continu de données ainsi qu'aux systèmes de transmission en mode paquets (blocs, salves, bursts). Pour ce dernier mode de transmission, il suffit de réitérer le processus d'égalisation du bloc autant de fois que nécessaire. L'idée de base est alors très simple. On opère une première passe sur le bloc considéré (paquet). Dans ces conditions, les paramètres (de l'égaliseur) estimés à la fin de cette passe sont alors plus proches de leurs valeurs finales. Du coup, l'itération suivante s'effectue en initialisant les paramètres du dispositif par les valeurs estimées à la fin de l'itération précédente et ainsi de suite. En opérant un certain nombre de passes, typiquement 4 ou 5, on arrive à un résultat tout à fait exceptionnel. Cette façon de procéder permet de travailler sur des systèmes de transmission en mode paquets et, à titre d'exemple, pour une modulation MDP2, la taille minimale du bloc requise pour cette stratégie « aveugle » est de l'ordre de 150 symboles, ce qui est extrêmement intéressant et correspond aux exigences imposées par les standards actuels. Cette procédure est très intéressante sur le plan applicatif, dans la mesure où beaucoup de systèmes actuels utilisent l'accès multiple à répartition dans le temps.

Les domaines couverts par cette invention sont, de manière non exhaustive, les télécommunications hertziennes, radiomobiles, troposphériques, ionosphériques et acoustiques sous-marines. Ces canaux délicats présentent tous la spécificité d'être fortement non stationnaires et affichent en général des réponses impulsionnelles longues au regard du temps symbole T, interdisant de facto l'usage de récepteurs optimaux tels que décrits par G.D. Forney [3]. De même, les câbles ou les paires téléphoniques peuvent également être concernées par le dispositif objet de l'invention. il suffit en effet de choisir P=1 (un seul capteur) et d'opter pour une stratégie fractionnée : le dispositif peut dans ce cas être assimilé à un ERD spatio-temporel à deux capteurs. Les projets actuels de transmission « haut débit » sur paires torsadées (XDSL, HDSL, VDSL, etc.) sont autant d'applications potentielles pour ce nouveau dispositif.

Les types de modulations concernées par cette invention sont toutes les modulations linéaires et notamment les modulations d'amplitude (Pulse Amplitude Modulation), les modulations d'amplitude selon deux porteuses en quadrature (MAQ), les modulations de phase (MDP-M) ainsi que certaines modulations de fréquence (GMSK, etc.). Globalement, le nouveau dispositif peut s'adapter à presque toutes les modulations actuellement utilisées.

D'ores et déjà, ce nouvel égaliseur a été testé avec succès sur des signaux de communications acoustiques sous-marines. Les résultats sont réellement convaincants, y compris pour des transmissions en modes paquets. Il est clair que dans la communauté scientifique actuelle, les traitements aveugles sont souvent injustement considérés comme des techniques certes prometteuses mais nécessitant un temps de convergence prohibitif au regard des applications actuelles de transmission en mode paquets. En réalité, l'égaliseur spatio-temporel objet de l'invention permet d'obtenir des performances extrêmement intéressantes sur des blocs de taille modeste. Pour illustrer le propos, dans le contexte des communications acoustiques sous-marines (ASM), nous avons traité avec succès des blocs de 1000 symboles d'un signal modulé à quatre états de phase (MDP4 ou QPSK en anglo-américain), de débit 25 kbit/s, alors que le support temporel de la réponse impulsionnelle s'étalait sur près de 60T, ce qui est énorme. Nul doute que de tels résultats sont de nature à modifier certaines pratiques, notamment dans le domaine des communications ASM où les quantités d'informations échangées sont parfois faibles. Dans ces applications, les techniques actuellement mises en oeuvre utilisent en général des récepteurs non cohérents alors qu'il est parfaitement possible d'envisager des techniques de réception cohérente, donc plus performantes, en utilisant une transmission en mode paquets. Naturellement, la durée du paquet doit être choisie de façon à ce que, sur cet horizon, le canal de transmission puisse être considéré comme stationnaire.

*EXEMPLE D'APPLICATION.*

Pour illustrer les performances du nouveau dispositif, on compare ci-après quelques résultats obtenus en communications ASM par un égaliseur spatio-temporel entraîné conventionnel et avec un égaliseur spatio-temporel du type de celui qui vient d'être décrit. La modulation utilisée est de type MDP4 (QPSK en anglo-américain), la fréquence porteuse de 62 kHz et le débit numérique de 33 kbit/s. la réponse impulsionnelle discrète du canal de transmission a un support temporel de l'ordre de 60 T, ce qui interdit de fait toute technique de réception optimale au sens du maximum de vraisemblance.

S'agissant de l'égaliseur spatio-temporel, les stratégies synchrones et fractionnées sont étudiées tout à tout, à la fois dans les modes entraîné et « aveugle ». la séquence d'apprentissage comporte 1000 symboles. Les différents graphes nous décrivent notamment l'évolution de l'EQM estimée à partir des données décidées. Parallèlement on indique, dans chaque cas de figure, le signal obtenu en passant les données décidées d(k) dans le corrélateur adapté à la séquence émise (séquence blanche de longueur maximale comportant 2047 symboles) dans le cas de 1, 2 ou 4 capteurs. Enfin, le troisième type de graphes nous décrit les constellations d'entrée et de sortie des égaliseurs comportant respectivement 1, 2 ou 4 capteurs.

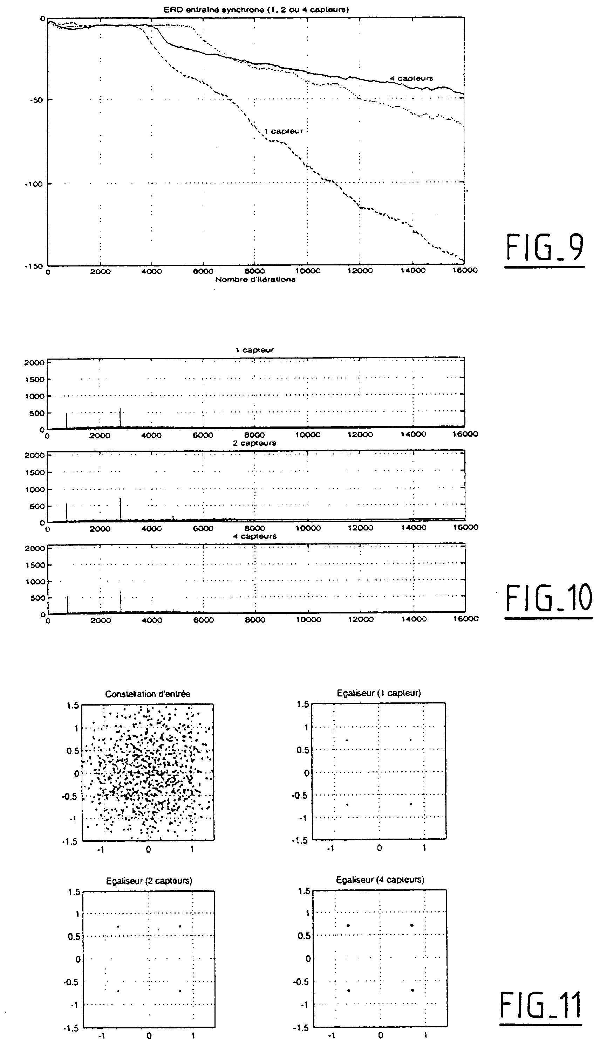

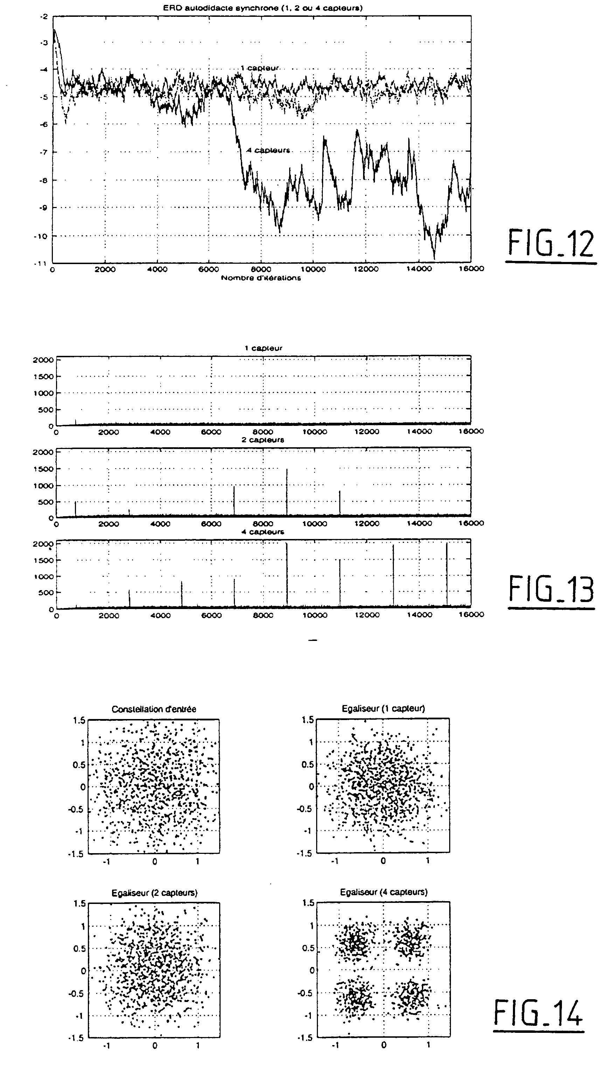

Les résultats sont représentés sur les figures 9 à 20. Il apparaît au travers de ces figures que la solution « aveugle » surclasse très nettement la solution entraînée, que ce soit en version synchrone ou en version fractionnée.

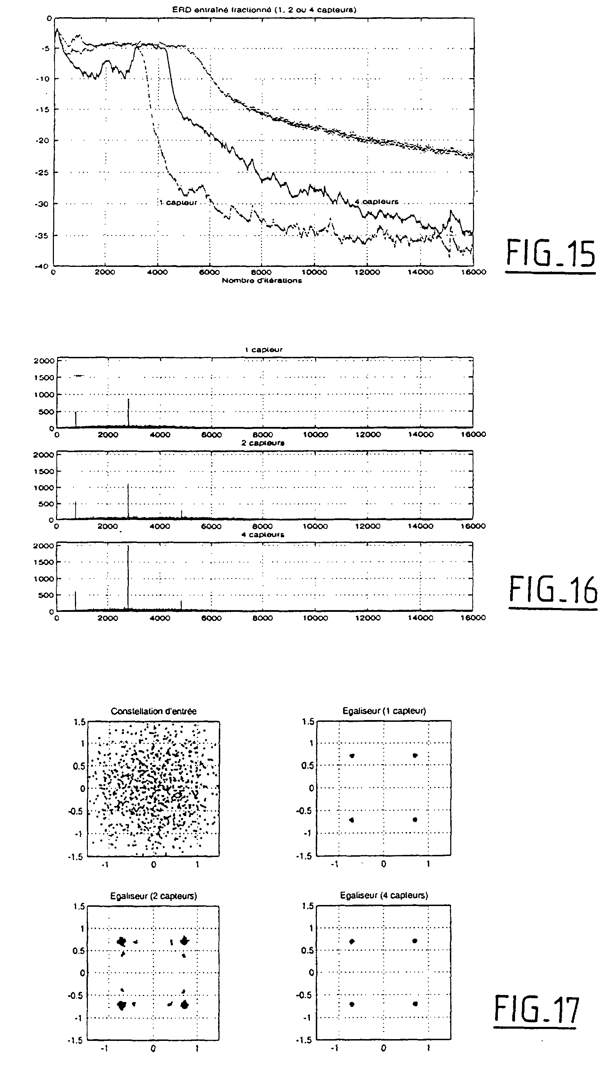

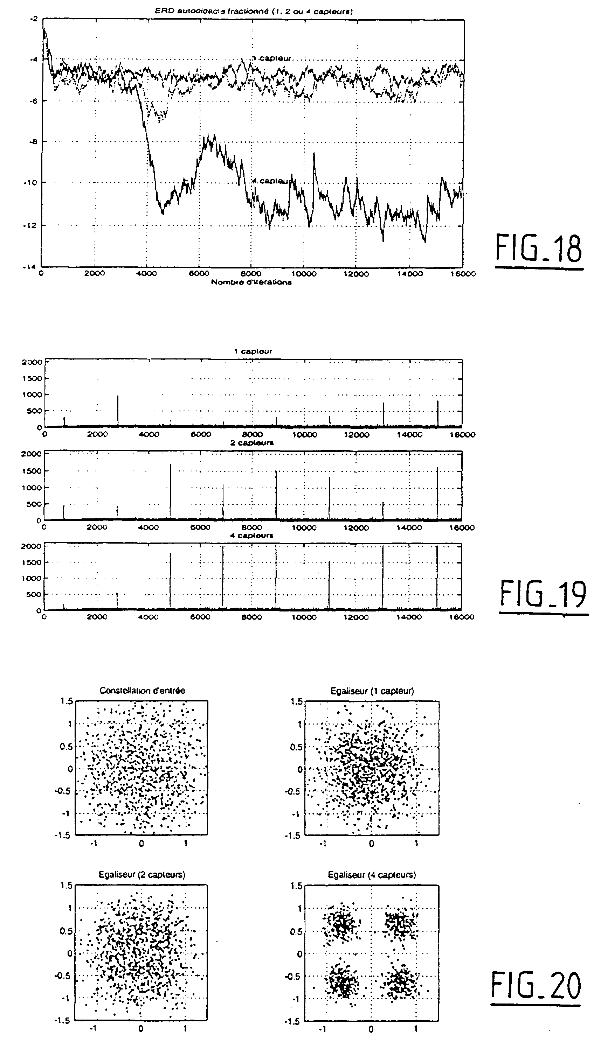

Même dans sa version fractionnée à 4 capteurs (figure 16), l'égaliseur spatio-temporel entraîné ne réussit pas à s'en sortir. En revanche, à partir d'un seul capteur, la sortie de l'égaliseur « aveugle » fractionné commence à devenir pertinente (figure 19) comme l'atteste la présence des pics en sortie du corrélateur, pics qui rendent compte de la reconnaissance du message émis.

Cette tendance s'accentue nettement avec deux capteurs et se confirme plus nettement avec quatre capteurs.

Ainsi, au travers de ces quelques résultats sur un fichier de données réelles, il apparaît que l'ERD spatio-temporel objet de l'invention est une technique innovante affichant des performances fort intéressantes sur un canal de transmission des plus sévères.

**Revendications**

1. Dispositif d'égalisation pour systèmes de communication numérique à plusieurs voies de réception, qui comporte des moyens (9) formant filtre transverse pour chacune des voies de réception, des moyens (10) pour la sommation des différentes voies, ainsi qu'une chaîne qui est en aval desdits moyens de sommation et qui comporte des moyens (12) de correction de phase, ledit dispositif d'égalisation comportant des moyens pour évaluer son degré de performance en fonction du signal de sortie dudit dispositif et pour, en fonction du résultat de cette évaluation, commuter d'une structure qui correspond au mode de fonctionnement normal, également appelé mode de poursuite ou de réceptions faciles, à une structure qui correspond à un mode de fonctionnement de convergence ou de réceptions difficiles ou réciproquement,
la structure de mode de convergence ou de réceptions difficiles comprenant sur chacune des voies de réception un filtre purement récursif (8) en amont des moyens formant filtre transverse, ce filtre purement récursif étant commuté en aval (13) des moyens formant filtre transverse en mode de poursuite ou de réceptions faciles,
**caractérisé en ce que**, dans la structure en mode de convergence ou de réceptions difficiles, le filtre récursif des différentes voies de réception est identique et est adapté par minimisation de la somme cumulée des puissances de sortie, ce filtre récursif étant commuté en aval des moyens de sommation en mode de poursuite ou de réceptions faciles.

2. Dispositif selon la revendication 1, **caractérisé en ce qu'**il comporte des moyens pour modifier les critères d'actualisation des parties transverse et récursive que le dispositif fonctionne en mode normal ou en mode de convergence ou de réceptions difficiles.

3.  Dispositif selon la revendication 2, **caractérisé en ce qu'**en mode de convergence ou de réceptions difficiles, les filtres récursifs sont actualisés selon un critère quadratique, les filtres transverses étant actualisés selon un critère statistique d'ordre supérieur à deux.

4.  Dispositif selon l'une des revendications 2 ou 3, **caractérisé en ce qu'**il comporte des moyens pour le piloter, en mode de poursuite ou de réceptions faciles, de façon à minimiser l'erreur quadratique moyenne estimée.

5.  Dispositif selon l'une des revendications précédentes, **caractérisé en ce que** le degré de performance est déterminé en fonction d'une estimation de l'erreur quadratique moyenne.

6.  Dispositif selon l'une des revendications précédentes, **caractérisé en ce qu'**en mode de convergence, les moyens de correction de phase sont disposés au voisinage immédiat des moyens de décisions (14).

7.  Dispositif selon l'une des revendications précédentes, **caractérisé en ce qu'**il comporte des moyens (11) de contrôle automatique de gain.

8.  Dispositif selon la revendication 7, **caractérisé en ce qu'**en mode de poursuite ou de réceptions faciles, les moyens de contrôle automatique de gain sont constitués par les moyens formant filtres transverses

9.  Dispositif selon la revendication 7, **caractérisé en ce qu'**en mode de convergence, les moyens de contrôle automatique de gain est situé en amont des filtres récursifs.

10. Dispositif d'égalisation de type synchrone, dans lequel les données reçues sont échantillonnées une fois par durée symbole, **caractérisé en ce qu'**il est constitué par un dispositif selon l'une des revendications précédentes.

11. Système de transmission à flot continu de données, **caractérisé en ce qu'**il comporte un dispositif d'égalisation selon l'une des revendications 1 à 10.

12. Système de transmission de données par paquets, **caractérisé en ce qu'**il comporte un dispositif d'égalisation selon l'une des revendications 1 à 10, les blocs de données étant traités par itérations successives, les paramètres du dispositif étant, à chaque nouvelle itération, initialisés en fonction des valeurs estimées à la fin de l'itération précédente.

**Claims**

1.  An equalizer device for digital communications systems having a plurality of receive channels, which device comprises means (9) forming a transversal filter for each receive channel, summing means (10) for summing the various channels, and a system downstream from said summing means including phase correction means (12), said equalizer device including decision-taking means for evaluating its performance as a function of the output signal from said device and for responding to the result of this evaluation by switching from a structure which corresponds to a normal mode of operation, also referred to as tracking mode or easy reception mode, to a structure which corresponds to a convergence mode of operation, also referred to as difficult reception mode, and vice versa, the convergence or difficult reception mode structure including, in each of the receive channels, a purely recursive filter (8) upstream from the means forming a transversal filter, the purely recursive filter being switched to downstream (13) from the means forming a transversal filter in tracking or easy reception mode, the device being **characterized in that**, in the structure in convergence or difficult reception mode, the recursive filter of the various receive channels is identical and is adapted by minimizing the accumulated sum of the output powers, the recursive filter being switched downstream from the summing means in tracking or easy reception mode.

2.  A device according to claim 1, **characterized in that** it includes means for modifying its criteria for updating the transversal and recursive portions of the device depending on whether it is operating in normal mode or in convergence or difficult reception mode.

3.  A device according to claim 2, **characterized in that** in convergence or difficult reception mode, the recursive filters are updated using a quadratic criterion, the transversal filters being updated using a statistical criterion of order greater than 2.

4. A device according to claim 2 or claim 3, **characterized in that** it includes means for controlling it in tracking or easy reception mode in such a manner as to minimize the estimated mean quadratic error.

5. A device according to any preceding claim, **characterized in that** its performance level is determined as a function of an estimate of mean quadratic error.

6. A device according to any preceding claim, **characterized in that** in convergence mode, the phase correction means are disposed in the immediate vicinity of the decision-taking means (14).

7. A device according to any preceding claim, **characterized in that** it includes automatic control gain means (11).

8. A device according to claim 7, **characterized in that** in tracking or easy reception mode, the automatic gain control means are constituted by the means constituting the transversal filters.

9. A device according to claim 7, **characterized in that** in convergence mode, the automatic gain control means are situated upstream from the recursive filters.

10. A synchronous type equalizer device in which the received data is sampled once per symbol duration, the device being **characterized in that** it is constituted by a device according to any preceding claim.

11. A system for transmitting a continuous stream of data, the system being **characterized in that** it includes an equalizer device according to any one of claims 1 to 10.

12. A system for transmitting data in packets, **characterized in that** it includes an equalizer device according to any one of claims 1 to 10, the blocks of data being processed by successive iterations, the parameters of the device being initialized, at each new iteration, as a function of the estimated values at the end of the preceding iteration.

**Patentansprüche**

1. Entzerrervorrichtung für digitale Telekommunikationssysteme mit mehreren Empfangszweigen, welche Mittel (9) umfaßt, die für jeden der Empfangszweige ein Transversalfilter bilden, Mittel (10) zur Summierung der verschiedenen Zweige, sowie eine den Summierungsmitteln nachgeschaltete Kette die Phasenkorrekturmittel (12) umfaßt, wobei die Entzerrervorrichtung Mittel aufweist zum Auswerten ihres Leistungsgrades in Abhängigkeit eines Ausgangssignals der Vorrichtung und zum Umschalten von einer Struktur, welche dem normalen Funktionsmodus, auch Nachführungsmodus oder Leichtempfangmodus genannt, entspricht, zu einer Struktur, die einem Konvergenz-Funktionsmodus oder Schwierigempfangmodus entspricht, oder umgekehrt,
wobei die Struktur des Konvergenz- oder Schwierigempfangmodus auf jedem seiner Empfangszweige ein rein rekursives Filter (8) umfaßt, welches den die Transversalfilter bildenden Mitteln vorgeschaltet ist, wobei das rein rekursive Filter im Nachführungs- oder Leichtempfangmodus den die Transversalfilter bildenden Mitteln nachgeschaltet (13) ist,
**dadurch gekennzeichnet, daß** bei der Struktur im Konvergenzoder Leichtempfangmodus das rekursive Filter der verschiedenen Empfangszweige identisch ist und durch Minimierung der Summe der kumulierten Ausgangsleistungen ausgelegt ist, wobei dieses rekursive Filter im Nachfolge- oder Leichtempfangmodus den Summierungsmitteln nachgeschaltet ist.

2. Vorrichtung nach Anspruch 1, **dadurch gekennzeichnet, daß** sie Mittel zum Modifizieren der Aktualisierungskriterien der transversalen und rekursiven Anteile umfaßt, unabhängig davon, ob die Vorrichtung im Normalmodus oder im Konvergenzoder Schwierigempfangmodus arbeitet.

3. Vorrichtung nach Anspruch 2, **dadurch gekennzeichnet, daß** im Konvergenz- oder Schwierigempfangmodus die rekursiven Filter gemäß eines quadratischen Kriteriums aktualisiert werden und die Transversalfilter gemäß eines statistischen Kriteriums einer Ordnung größer als Zwei aktualisiert werden.

4. Vorrichtung nach einem der Ansprüche 2 oder 3, **dadurch gekennzeichnet, daß** sie Mittel umfaß, um sie im Nachfolgeoder Leichtempfangmodus derart zu steuern, daß der abgeschätzte mittlere quadratische Fehler minimiert wird.

**5.** Vorrichtung nach einem der vorstehende Ansprüche, **dadurch gekennzeichnet, daß** der Leistungsgrad in Abhängigkeit einer Abschätzung des mittleren quadratischen Fehlers bestimmt wird.

**6.** Vorrichtung nach einem der vorstehenden Ansprüche, **dadurch gekennzeichnet, daß** im Konvergenzmodus die Phasenkorrekturmittel direkt benachbart zu den Entscheidungsmitteln (14) angeordnet sind.

**7.** Vorrichtung nach einem der vorstehenden Ansprüche, **dadurch gekennzeichnet, daß** sie Mittel (11) zur automatischen Verstärkungsregelung aufweisen.

**8.** Vorrichtung nach Anspruch 7, **dadurch gekennzeichnet, daß** im Nachfolge- oder Leichtempfangmodus die Mittel zur automatischen Verstärkungsregelung durch die Mittel gebildet werden, welche die Transversalfilter bilden.

**9.** Vorrichtung nach Anspruch 7, **dadurch gekennzeichnet, daß** im Konvergenzmodus die Mittel zur automatischen Verstärkungsregelung vor den rekursiven Filtern angeordnet sind.

**10.** Entzerrervorrichtung des synchronen Typs, in der die empfangenen Daten einmal nach Symboldauer gesampelt werden, **dadurch gekennzeichnet, daß** sie durch eine Vorrichtung gemäß einem der vorstehenden Ansprüche gebildet wird.

**11.** Übertragungssystem mit kontinuierlichem Datenstrom, **dadurch gekennzeichnet, daß** es eine Entzerrervorrichtung gemäß einem der Ansprüche 1 bis 10 umfaßt.

**12.** Übertragungssystem paketierter Daten, **dadurch gekennzeichnet, daß** es eine Entzerrervorrichtung gemäß einem der Ansprüche 1 bis 10 umfaßt, wobei die Datenblöcke durch sukzessive Iterationen behandelt werden und die Parameter der Vorrichtung bei jeder neuen Iteration in Abhängigkeit der am Ende der vorhergehenden Iteration abgeschätzten Werte initialisiert werden.

FIG_1

FIG_2

FIG_3

FIG_4

FIG.5

FIG.6

$s_{1,1}(k)$ $u_{1,1}(k)$ $v_{1,1}(k)$

$B1,1(z)$

8 $-$

$A(z)$

9

$s_{1,2}(k)$ $u_{1,2}(k)$ $v_{1,2}(k)$

$B1,2(z)$

8 $-$

$A(z)$

9

12

$v(k)$ $w(k)$

$+$ $g$ $X$

10

$exp(-j\hat{\theta})$

$s_{p,1}(k)$ $u_{p,1}(k)$ $v_{p,1}(k)$

$Bp,1(z)$

8 $-$

$A(z)$

9

$s_{p,2}(k)$ $u_{p,2}(k)$ $v_{p,2}(k)$

$Bp,2(z)$

8 $-$

$A(z)$

9

FIG_7

9

$s_{1,1}(k)$

$B1,1(z)$

9

$s_{1,2}(k)$

$B1,2(z)$

11 12

$p(k)$ $w(k)$ 14

9 $+$ $+$ $\hat{d}(k)$

$+$ $g$ $X$ $+$

$+$ $+$ $-$

$s_{p,1}(k)$

$Bp,1(k)$

$s_{p,2}(k)$ $exp(-j0)$ $A(z)$

$Bp,2(k)$

9 13

FIG_8

ERD entraîné synchrone (1, 2 ou 4 capteurs)

4 capteurs

1 capteur

Nombre d'itérations

## FIG_9

1 capteur

2 capteurs

4 capteurs

## FIG_10

Constellation d'entrée

Egaliseur (1 capteur)

Egaliseur (2 capteurs)

Egaliseur (4 capteurs)

## FIG_11

FIG.12

FIG.13

FIG.14

ERD entraîné fractionné (1, 2 ou 4 capteurs)

1 capteur   4 capteurs

Nombre d'itérations

<u>FIG.15</u>

1 capteur

2 capteurs

4 capteurs

<u>FIG.16</u>

Constellation d'entrée

Egaliseur (1 capteur)

Egaliseur (2 capteurs)

Egaliseur (4 capteurs)

<u>FIG.17</u>

FIG.18

FIG.19

FIG.20

25